**Europäisches Patentamt**

**European Patent Office**

**Office européen des brevets**

(19)

(11) Veröffentlichungsnummer : **0 359 925 B1**

(12)

# EUROPÄISCHE PATENTSCHRIFT

(45) Veröffentlichungstag der Patentschrift :
**16.09.92 Patentblatt 92/38**

(51) Int. Cl.⁵ : **A23L 3/34**

(21) Anmeldenummer : **89112249.1**

(22) Anmeldetag : **05.07.89**

(54) **Sauerstoffabsorptionsmittel und Verwendung desselben.**

(30) Priorität : **23.08.88 DE 3828531**
**01.02.89 DE 3902921**

(43) Veröffentlichungstag der Anmeldung :
**28.03.90 Patentblatt 90/13**

(45) Bekanntmachung des Hinweises auf die
Patenterteilung :
**16.09.92 Patentblatt 92/38**

(84) Benannte Vertragsstaaten :
**AT BE CH DE ES FR GB IT LI NL SE**

(56) Entgegenhaltungen :
**EP-A- 0 272 923**
**DE-A- 2 520 792**
**US-A- 3 127 274**
**US-A- 3 193 393**

(73) Patentinhaber : **Ernst, Rudolf, Dr.-Ing.**
**Rehbergstrasse 4**
**W-8000 München 71 (DE)**

(72) Erfinder : **Ernst, Rudolf, Dr.-Ing.**
**Rehbergstrasse 4**
**W-8000 München 71 (DE)**

(74) Vertreter : **von Raffay, Vincenz, Dipl.-Ing. et al**
**Patentanwälte Raffay, Fleck & Partner**
**Postfach 32 32 17**
**W-2000 Hamburg 13 (DE)**

EP 0 359 925 B1

## Beschreibung

Die vorliegende Erfindung betrifft ein Sauerstoffabsorptionsmittel nach dem Oberbegriff des Anspruchs 1 und seine Verwendung.

Ein derartiges Sauerstoffabsorptionsmittel ist beispielsweise aus der DE - A - 2520792 oder auch aus der DE - 2836876 C2 bekanntgeworden.

Diese dienen der verbesserten Frischhaltung von verpackten Lebensmitteln, wie z.B. Trockenmilch, gemahlenem Kaffee, geschroteten Getreidekörnern, bestimmten Wurst- und Fleichwaren, Pralinen, fetthaltigen Dauerbackwaren usw. Auch der oxidative Abbau von empfindlichen Arzneimitteln kann auf diese Weise verhindert werden.

Frischaltebeutel mit Sauerstoffabsorbierenden Eisenpräperaten der obigen Lehre sind seit längerer Zeit bekannt und im Einsatz. Beim Verpacken der Lebensmittel bzw. der Arzneimittel werden diese Beutel der Verpackung beigegeben. Die Verpackungen selbst werden sofort anschliessend in einer gasdichten Folie versiegelt, so daß unmittelbar nach der Verpackung der Sauerstoffinhalt der Packung durch die den Sauerstoff absorbierende Substanz irreversibel absorbiert wird.

Die eisenhaltigen Präperate haben jedoch den Nachteil, daß bei einer zufälligen Zerstörung des Beutels sich das Eisenpräperat zusammen mit seinem Katalysator mit dem Lebensmittel vermischt und möglicherweise gegessen wird. Auch eine absichtliche oder unabsichtliche Verspeisung ist nicht auszuschliessen. Vom Standpunkt der Verbrauchersicherheit sind solche Präperate daher abzulehnen.

Das gleiche gilt für die ebenfalls bekanntgewordenen Frischaltebeutel auf der Basis Ascorbinsäure. Zur Aktivierung der Sauerstoffabsorption der Ascorbinsäure ist die Zugabe von Schwermetallsalzen notwendig, sodass auch hier gravierende Vorbehalte im Hinblick auf die Verbrauchersicherheit gemacht werden müssen.

Die vorliegende Erfindung hat sich daher zum Ziel gesetzt, die eingangs erwähnten Mittel derart zu verbessern, daß es die oben genannten Nachteile vermeidet. Es sollte sich in einem Beutel als Frischhaltemittel für Lebensmittel eignen und sich gefahrlos mit dem Lebensmittel vermischen lassen oder auch gegessen werden können. Weitere Anwendungsformen sind die Zugabe als Tablette in eine Verpackung, oder an einer Verpackung befestigt. Auch die Einarbeitung in eine Verbundfolie aus einseitig gasdurchlässigem und gasundurchlässigem Material ist sollte möglich sein. Die gasdurchlüssige Folie ist bei dieser Anwendungsform dem zu schützenden Produkt zugekehrt, sodass der zu absorbierende Sauerstoff durch die durchlässige Folie zum absorbierenden Mittel gelangt. Diese Anwendungsform hat den Vorteil, dass der Verbraucher den Sauerstoffabsorber nicht oder nicht als störend wahrnimmt.

Für die Anwendung bei der Verpackung von Arzneimitteln gilt das gleiche.

Ein hierfür in Frage kommendes System ist die Kombination von Glucose und Glucoseoxidase.

Eine weitere Forderung aus der praktischen Anwendung der Frischhaltebeutel ist , dass der Sauerstoff in einer Verpackung innerhalb kurzer Zeitspannen absorbiert wird , also im Bereich von Stunden bis maximal 1-2 Tagen, andernfalls kann der durch den Sauerstoff induzierte Verderb des Lebensmittels bereits beginnen.

Hier zeigten sich nun erhebliche bisher nicht gelöste Schwierigkeiten bei der Verwendung von Glucose und Glucoseoxidase. Nach dem Stand der Technik arbeiten Enzyme und Stoffkombinationen ums so besser je mehr Flüssigkeit (Wasser) für die Diffusion der Reaktionspartner zueinander und für den Abtransport der reagierten Produkte zur Verfügung steht. Enzymatische Reaktionen laufen also demnach am schnellsten in einer flüssigen Zubereitung ab, wobei die erzielbare Reaktionsgeschwindigkeit ein ausschlaggebender Faktor für die Wirtschaftlichkeit und die Verwendbarkeit überhaupt ist. Andererseits heisst dies nach der derzeitigen Lehre, daß eine enzymatische Reaktion um so langsamer abläuft, je weniger Wasser vorhanden ist.

Die nach diesen Erkenntnissen hergestellten flüssigen bis pastösen Kombinationen von Glucose und Enzymen zeigten jedoch zeitlich vollkommen unzureichende Sauerstoffabsorption und konnten auch nach mehreren Tagen den Sauerstoff aus Packungen nicht vollkommen absorbieren.

Natürlich kann man durch Erhöhung der Glucoseoxidasezugabe die Reaktions- bzw. Absorptionsgeschwindigkeit grundsätzlich erhöhen. Die Glucoseoxidase ist jedoch ein sehr teures Produkt und dieser Weg ist, aus Gründen der Wirtschaftlichkeit, wenig sinnvoll. Im Gegenteil muß gerade durch die Minimalisierung des Glucoseoxidaseanteils die Wirtschaftlichkeit erreicht und erzielt werden.

Kieselsäuren zur Kombination mit Flüssigkeiten sind seit Jahren in der praktischen Anwendung. Sie weisen eine sehr große Oberfläche pro Gewichtseinheit auf, und liegen teilweise als nahezu kugelförmige Partikel vor. Eine Kieselsäure mit dem mittleren Korndurchmesser von 100 $\mu$m weist z.B. eine Oberfläche von ca 200 m2/g auf.

Die ersten Versuche mit Kieselsäure wurden nach der vorherrschenden Auffassung durchgeführt. Vergleichsweise große Mengen an Wasser sowie entsprechende Mengen von Glucose und Glucoseoxidase wurden mit der Kieselsäure zu einer pastösen Masse vermengt und ergaben wiederum vollkommen unzureichende Sauerstoffabsorptionsgeschwindigkeiten.

Erst in dem Augenblick in dem mit geringeren Wasserzugaben (bei sonst gleichen Glucose und Glucoseoxidase-dosierungen) entgegen der herrschenden Lehre, gearbeitet wurde, stellten sich Überraschenderweise um ein vielfaches höhere Absorptionsgeschwindigkeiten ein.

Bei derartigen Zubereitungen verteilt sich die Flüssigkeit zunächst als sogenanntes Haftwasser in einem äusserst feinen Film auf der großen zur Verfügung stehende Kieselsäurepartikeloberfläche, hierbei handelt es sich um Filmdicken in der Größenordnung unter 1/100 μm bei Zugabe von ca 1g Wasser pro g Kieselsäure. Man sollte annehmen, daß in diesem Dimensionsbereich infolge der hier bereits wirkenden molekularen Haftkräfte zwischen Feststoff und Flüssigkeit eigentlich gar keine der notwendigen Diffusionen zum und wieder hinweg vom Enzym stattfinden kann, und damit keine Absorption, aber das Gegenteil ist offensichtlich der Fall. Bei weiterer Flüssigkeitszugabe bildet sich an den Berührungspunkten der Partikel sogenanntes Zwickelwasser, und anschliessend füllen sich die Poren bzw. die Partikelzwischenräume mit Wasser.

Da die Absorptionsgeschwindigkeit bei steigender Wassermenge schnell, auf technisch nicht mehr brauchbare Werte abnimmt liegt die Vermutung nahe, daß die sich allmählich mit Wasser zusetzenden Partikelzwischenräume , hier als Poren bezeichnet, die enzymatische Reaktion behindern , indem sie vermutlich die Sauerstoffwanderung zur Glucose und zum Enzym entgegem der bisher herrschenden Auffassung entscheidend herabsetzen.

Die Verwendung von Kieselsäure als Trägerstoff, bei Zugabe von vergleichsweise geringen proz. Wasserzugaben, brachte also erstaunlicherweise eine Beschleunigung der Absorption in einen Überhaupt erst technisch und wirtschaftlich brauchbaren Bereich. Als positiver Nebeneffekt wurde gleichzeitig eine Mischung gefunden , die als im wesentlichen trockene Mischung technisch wesentlich leichter zu verarbeiten ist.

Kieselsäure ist in der BRD sowie den meisten europäischen Ländern sowie Japan und USA zugelassener Lebensmittelzusatzstoff.

Nach der vorliegenden Erfindung wird also Glucose , Glucoseoxidase, Wasser und Fällungskieselsäure ($SiO_2$) in einem derartigen Verhältniss miteinander gemischt, daß ein Gemisch mit einem Netzwerk von flüssigkeitsfreien Poren bzw. ein Gemisch mit einer ausreichenden Porenanzahl entsteht, durch die der zu entfernende Sauerstoff gasförmig zur Glucose/Glucoseoxidase diffundieren kann; wenn noch mindestens 40 Vol% oder mehr der verfügbaren Partikel bzw. Korn-zwischenräume nicht mit Flüssigkeit angefüllt sind. je mehr Wasser nicht mehr von Oberfläche der Kieselsäurepartikel als Haftwasser aufgenommen wird , sondern als Zwickelwasser und bei noch mehr Flüssigkeit als Kapillar- bzw. Partikelzwischenraumwasser die Partikel-zwischenräume der Kieselsäure anfüllt, desto mehr nimmt die Absorptionsgeschwindigkeit des Sauerstoffes ab um schließlich bei vollgefüllten Zwischenräumen auf ein Bruchteil der Anfangsgeschwindigkeit abzusinken , Derartige mit zuviel Wasser angereicherte Mischungen sind praktisch nicht mehr brauchbar.

Das oben angegebene Porenvolumen bezieht sich auf eine Mischung die nach dem stand der Technik , durch Mischung in einem Pulvermischer und nachfolgendem Aufsprühen der Flüssigkeit während des laufenden Mischvorganges stattfindet.

Diese Art der Herstellung ist dann empfehlenswert, wenn das Absorptionsmittel möglichst als Pulver und in rieselfähiger Form in Sauerstoffdurchlässige Beutel abgefüllt werden soll.

Es gibt jedoch Anwendungsfälle, wo die Zugabe des Absorptionsmittels in Pulverform nicht zweckmässig ist. Bei Flüssigkeiten in Flaschen ist es in vielen Fällen sinnvoll das Mittel in geeigneter Form mit dem Verschlusskorken oder Verschlusskappe zu verbinden.Bei Lebensmitteln , die in breiiger Form vorliegen , besteht die Gefahr, dass beim Lagern und während des Tranportes sich die Beutel mit dem Lebensmittel vermischen und verkleben und dadurch die Verkaufsqualität beeinträchtigen. In diesen Fällen ist es sinnvoll, das nach der obigen Lehre hergestellte Mittel unter Zusatz eines Tablettierungsmittels zu komprimieren und als Tablette z.B. in einen Kronenkorken zwischen Dichtfolie und Metall einzuschieben, oder in einer Kunstoffdose, kleinster Abmessung an den Deckel der Verpackungen zu kleben oder anderweitig zu befestigen, oder in Form von kleinen Pellets oder anderen verdichteten Formen in Folien einzuarbeiten.

Die Verarbeitung zur Tablette hat den Vorteil , dass für bestimmte Zugabemethoden die Manipulierbarkeit sehr viel besser , bzw überhaupt erst gegeben ist und das Volumen des fertigen Absorptionsmittels um ca 50% kleiner ist als in unverdichtetem Zustand.

Überraschenderweise wurde gefunden, dass die Absorptionsfähigkeit des Mittels durch die Kompression sich in keinerweise verringerte, sondern sogar sich teilweise verbesserte. Auch hier war jedoch festzustellen, dass in dem Augenblick in dem das Porenvolumen bzw. die Poren durch die Kompresssion in der Tablettenpresse gegen vollkommen verschwindet bzw. gegen 0 % strebte die Absorptionsgeschwindigkeit des Sauerstoff dramatisch bzw. schlagartig abnimmt.

Ein Kennzeichen eines verschwindenden Porenvolumens ist zum Beispiel der beginnende Wasseraustritt aus dem Gemisch beim Tablettieren.

Zur Herstellung von Tabletten oder Pelletes wird zunächst in oben beschriebener Weise eine rieselfähige Mischung hergestellt. Anschliessend werden durch Kompression die Tabletten bzw Pellets hergestellt. Selbstverständlich kann man Pellets auch direkt durch Extrusion unter Verwendung der erfindungsgemässen Rezepturen herstellen. Da bei der Verdichtung das Gasporenvolumen abnimmt ist es zweckmässig mit einer prozentual geringeren Wassermenge zu arbeiten.

Nach dem Stand der Technik werden fertige Absorbermischungen in Form von Pulver nach Abfüllung in Beutel oder Tabletten sofort nach der Herstellung in Partien von 100, 200, Stück oder mehr in gasdichte Folien eingeschweißt, die erst wieder bei der endgültigen Verwendung geöffnet wird, sodass die volle Absorptionskapazität bis zur Verwendung erhalten bleibt.

Bei der Oxidation der Glucose entsteht bekanntlich Gluconsäure. Die entstehende Gluconsäure senkt den pH-Wert schnell in einen Bereich ab , indem das Enzym inaktiviert wird oder aber die Sauerstofabsorptionsgeschwindigkeit auf unbrauchbar kleine Werte absinkt. Dem System muss daher eine die Säure bindende Substanz zugefügt werden. Hierbei sollte es sich keinesfalls um eine Substanz handeln, die das System vor Beginn der Sauerstoffabsorption in einen basischen Bereich einstellt, weil ein stark basischer Bereich das Enzym in seiner Aktivität irreversibel schädigt. Die bekannten flüssigen Puffer haben allerdings alle viel eine zu geringe Absorptions bzw Säurebindungsfähigkeit.Überraschenderweise wurde nun gefunden, daß das in Wasser nur geringfügig lösbare Calziumhydrogenphosphat eine ausreichende Säurebindungsfähigkeit besitzt, ohne das System vor Beginn der Absorption in einen unzulässig hohen basischen Bereich abzusenken. Für zahlreiche Anwendungsfälle ist dieses Mittel ausgezeichnet geeignet, insbesondere dann, wenn aus sensorischen Gründen eine Kohlendioxyd Atmosphäre nicht erwünscht ist. Ebenfalls in Frage kommt hierfür Dinatriumhydrogenphosphat. Letztere Substanz hat jedoch den Nachteil zunächst das Gemisch in einen alkalischen pH Bereich einzustellen ( pH Wert ca 8-9) wodurch wiederum die Sauerstoff-absorptionsgeschwindigkeit vermindert , und möglicherweise die Aktivität des Enzyms irreversibel beeinträchtigt wird.

Ein weiterer Nachteil sowohl der Eisenpräperate als auch von Ascorbinsäurepräperate ist es , daß durch die Absorption des Sauerstoffes in der Packung ein Vacuum entsteht.Dieses Vacuum führt in vielen Fällen zu einer unansehnlichen Verformung der Verpackung und durch das Vaccuum verursacht, diffundiert infolge der oft vorhandenen winzigen Mikroporen anschliessend wieder Sauerstoff in die Packung, sodaß nach kurzer Zeit die gesamte Absorptionskapazität des Beutels aufgebraucht ist und die Frischaltung nicht mehr gewährleistet ist.

Zur Vermeidung der in vielen Fällen sehr unerwünschten Vaccumbildung wurde nach geeigneten Substanzen gesucht , die für den absorbierten Sauerstoff in gleicher Menge Kohlendioxyd freisetzen. Überraschenderweise wurde nun gefunden , dass durch Zugabe des in Wasser praktisch unlöslichen Calziumcarbonats (oder Magnesium-carbonat) die Absorptionsgeschwindigkeit wesentlich verbessert werden konnte, und zwar auf mehr als den doppelten Wert. Gleichzeitig wird nahezu stöchiometrisch bei entsprechendem Carbonatüberschuss für den absorbierten Sauerstoff Kohlendioxyd freigesetzt.

Die Calziumcarbonatzugabe beschleunigt also auf der einen Seite die Absorptionsgeschwindigkeit ganz erheblich und verhindert gleichzeitig die Entstehung eines störenden und beeinträchtigenden Vacuums in der Verpackung. ( Calziumcarbonat und Magnesiumcarbonat sind ebenfalls zugelassene Lebensmittelzusatzstoffe, mit in etwa gleichem Zulassungsbereich nach Ländern wie bei Enzymen,ähnliches gilt übrigens auch für Calziumhydrogenphosphat).

Als ebenfalls geeignet hat sich Natriumhydrogencarbonat erwiesen, wobei die benötigten Mengen im Vergleich zum Ca-carbonat sich aus der stöchiometrischen Umrechnung des Umsatzes mit der Gluconsäure ergeben.

Nach der Lehre dieser Erfindung wird demnach Calziumcarbonat im Verhältnis von 1:5 bis 1.5:1 zur Glucose zugesetzt und erzeugt auf diese Weise den Vacuumausgleich und beschleunigt die Absorptionsgeschwindigkeit. Durch diese Beschleunigung der Geschwindigkeit gelingt es wiederum den wirtschaftlich ausschlaggebenden Anteil der Glucoseoxidase im Gemisch entscheidend abzusenken.

Als besonders wirkungsvoll haben sich folgende Mischbereiche ergeben:

Jeweils 1 g Glucose werden vermischt mit o.35 - 1.5 g Fällungskieselsäure, 0.15 - 0.8 g Calziumcarbonat, und 0.025 - o.25 $cm^3$ Glucoseoxidase (Aktivität der Oxidase Min. 1500 titrimetric Einheiten/ml) sowie 0.5 - 1.5 cm3 Wasser.

Eine typische optimierte Rezeptur mit einer maximalen Absorptions-kapazität von 100 ml reinen Sauerstoffs (entsprechend 500 ml Luft) besteht nach der Lehre dieser Erfindung aus : 2g Glucose, 1,8g gefällter Kieselsäure, 0.9g Calziumcarbonat, 2,2 cm3 Wasser, 0,11 cm3 Glucoseoxidase der Aktivität 1500.

Diese Mischung ist nach intensiver mechanischer Mischung rieselfähig und wird in Vier- oder Drei-seitensiegelrandbeutel abgefüllt und bis zur Verwendung wiederum mit mehreren Beuteln zusammen gasdicht verpackt.

Ein nach dieser Rezeptur hergestellter Beutel aus einer entsprechend sauerstoffdurchlässigen Folie oder Papier entfernt aus einer 400 ml Luft enthaltenen Verpackung den gesamten Sauerstoff bereits nach 20 Stunden. Eine gleiche Rezeptur , bei der jedoch statt Calziumcarbonat, Calziumhydrogenphosphat genommen wurde benötigte zum gleichen Ergebnis mehr als 40 Stunden. Sie ist für den praktischen Einsatz jedoch geeignet , wenn keine CO2 Atmosphäre erwünscht ist.

Eine ähnliche Rezeptur geht aus von 2g Glucose, 1.5g Kieselsäure, 1.9cm3 Wasser, 0.9g Ca-carbonat, sowie 0.11cm3 Glucoseoxidase (Aktivität 1500). Mit dieser Rezeptur wird der Sauerstoff aus dem gleichen Volumen wie oben in 21h entfernt.selbstredend gibt es auch für den Wassergehalt eine untere Grenze, unterhalb derer die Reaktionsgeschwindigkeiten erheblich absinken, in dieser Hinsicht zeigt die obere Rezeptur eine erste Verminderung der Absorptionsgeschwindigkeit.

Eine weitere Reseptur geht aus von 2g tablettierfähiger Glucose wie z.B. Emdex (Warenzeichen der Firma Finnsugar, Finnland), 1,5g Kieselsäure, 1,7g Wasser, 0,2g Microkristalliner Cellulose, 0,8g Calziumcarbonat sowie 0,11cm3 Glucoseoxidase der Aktivität 15oo. Diese Mischung lässt sich tablettieren unter Verminderung des Volumens von ca 50%. Eine derartige Mischung kann naturgemäss auch auf einem Extruder komprimiert werden und anschliessend als Pellets in Beutel oder Minibehältnisse gefüllt werden.

Bei einer weiteren Rezeptur wurden 2 g Glucose mit 1.5g Kieselsäure, 0.9g Calziumcarbonat, o.11cm3 Glucoseoxidase (Aktiväet 1500), mit 2.6cm3 Wasser vermischt. Der Sauerstoff aus dem gleichen Volumen wie oben (400 ml) wurde erst nach 2.5 Tagen absorbiert. Wenn auch hier eine deutliche Geschwindigkeitsabnahme der Absorption durch beginnende Porenfüllung vorliegt, so mag es doch Fälle geben , in denen diese Absorptionsgeschwindigkeit noch ausreicht.

Bei einer weiteren Rezeptur bei der vollkommen auf die Kieselsäure verzichtet wurde , also 2g Glucose mit 0.9g Calziumcarbonat, 2.8g Wasser sowie 0.11 cm3 Glucoseoxidase der Aktiväet 1500 war nach mehr als 4.0 Tagen der Sauerstoff noch nicht vollkommen absorbiert.

Ein gleiches Ergebnis, wie bei der Rezeptur ohne Kieselsäure, wurde erzielt mit einer Rezeptur von 2g Glucose, 1.5g Kieselsäure, 0.9g Calziumcarbonat sowie 4.3cm3 Wasser und 0.11cm3 Glucoseoxidase.(Aktiväet 1500) Bei der letzteren Mischung war ersichtlich, daß keine flüssigkeitsfreien Poren mehr vorlagen. Die letzten beiden Rezepturen sind für den praktischen Einsatz ungeeignet.

In denjenigen Fällen, in den Kieselsäure aus Lebensmitteltechnologischen Gründen nicht erwünscht ist kann an dessen Stelle Microkristalline Cellulose , entfettete , gemahlene Sojabohnen, oder gemahlene Weizenkleie mit geringfügig abgeänderten Rezepturen verwandt werden.

In manchen Fällen ist es wünschenswert, vor allem bei Klarsichtverpackung des Lebensmittels, darüber eine Information zu erhalten, ob die Packung noch intakt , oder ob Sauerstoff in die Packung eingedrungen und nicht mehr absorbiert werden kann . Nach der vorliegenden Erfindung geschieht das durch Zugabe eines farbumschlagenden pH-Indikators.

Da die entstehende Gluconsäure den pH-wert stark absenkt braucht man nur die Calziumcarbonatdosierung entsprechend knapp vorzunehmen , sodass nach z.B. 80% Abbau der Glucose kein Calziumcarbonat mehr zur Verfügung steht und somit der pH-wert beginnt stark abzufallen. Während bei ausreichender Calziumcarbonatdosierung der pH Wert bei ca 7.0 liegt, sinkt er dann schnell in den Bereich 4.0 ab ,sodaß z.B. ein Lackmusindikator einen Farbumschlag von rot auf blau anzeigt und damit weiter anzeigt , dass die Absorptionskapazität nahezu erschöpft ist und die Verpackung verbraucht werden muss. Diese Anzeige hat gegenüber den bereits bekannten reinen Sauerstoffanzeigern (siehe DE 2836876) den Vorteil , daß sie bereits meldet wenn die Fähigkeit des Absorbers Sauerstoff aufzunehmen nachlässt, und nicht erst dann, wenn bereits Sauerstoff in die Verpackung eingedrungen ist. Selbstverständliche Voraussetzung ist hierbei, daß in diesem Fall ein Teil der Absorberverpackung mit einer Klarsichtfolie ausgerüstet sein muß.

## Patentansprüche

1) Sauersstoffabsorptionsmittel auf der Grundlage einer Kombination eines Adsorptionsmittels in Form poröser, gefällter Kieselsäure als Wasserträger, Wasser und Glucose und Glucoseoxidase dadurch gekennzeichnet , daß zumindest 40 Vol% der Partikel bzw Porenzwischenräume der gefällten Kieselsäure und anderer zugemischter Feststoffe im Fall eines im wesentlichen rieselfähigen Produktes wasserfrei gehalten werden.

2) Sauerstoffabsorptionsmittel nach Anspruch 1, dadurch gekennzeichnet , daß nach Mischung und anschliessender Komprimierung des im wesentlichen rieselfähigen Produktes entstandene Tabletten oder Pellets eine Restporenstruktur aufweisen.

3) Sauerstoffabsorptionsmittel nach Anspruch 1, gekennzeichnet durch kristalline Cellulose als Wasserträger.

4) Sauerstoffabsorptionsmittel nach Anspruch 1 gekennzeichnet durch entfettete und gemahlene Sojabohnen als Wasserträger.

5) Sauerstoffabsorptionsmittel nach Anspruch 1 gekennzeichnet durch gemahlene Weizenkleie als Wasserträger.

6) Sauerstoffabsorptionsmittel nach Anspruch 1 bis 5, gekennzeichnet durch Calzium- oder Magnesium-

carbonat als Reaktionsbschleuniger und/oder Kohlendioxydspender

7) Sauerstoffabsorptionsmittel nach Anspruch 1 bis 5, gekennzeichnet durch Natriumhydrogencarbonat als Reaktionsbeschleuniger und/oder Kohlendioxydspender.

8) Sauerstoffabsorptionsmittel nach Anspruch 1 bis 5, gekennzeichnet durch Di-Natriumhydrogenphosphat als Säurebinder.

9) Sauerstoffabsorptionsmittel nach Anspruch 1 bis 5, gekennzeichnet durch Calziumhydrogenphosphat als Säurebinder.

10) Sauerstoffabsorptionsmittel nach Anspruch 6, dadurch gekennzeichnet, daß das Mengenverhältnis von Calzium- und/oder Magnesiumcarbonat zu Glucose 1 : 5 bis zu 1.5 : 1 beträgt.

11) Sauerstoffabsorptionsmittel nach Anspruch 1 bis 10, gekennzeichnet durch einen nach Verbrauch des Säurebinders farbumschlagenden pH - Indikator.

12) Verwendung eines sauerstoffdurchlässigen Beutels, enthaltend ein Sauerstoffabsorptionsmittel nach einem oder mehreren der vorstehenden Ansprüche 1 - 11 , zur Frischhaltung von Lebensmitteln.

13) Verwendung einer sauerstoffdurchlässigen Kleinstbehälters , enthaltend ein Sauerstoffabsorptionsmittel nach einem oder mehreren der vorstehenden Ansprüche 1 - 11 , welcher entweder mit einem Flaschenverschluss oder mit einem Deckel einer Lebensmittelverpackung fest verbunden wird, zur Frischhaltung von Lebensmitteln.

14) Verwendung einer Tablette, enthaltend ein Sauerstoffabsorptionsmittel nach einem oder mehreren der vorstehenden Ansprüche 1 - 11 , welche in einer vorgefertigten Tasche einer Verpackung , oder Aussparung eines Flaschen-verschlusses eingelegt wird, zur Frischhaltung von Lebensmitteln.

15) Verwendung von kleinen Pellets, enthaltend ein Sauerstoffabsorptionsmittel nach einem oder mehreren der vorstehenden Ansprüche 1 - 11 , welche zwischen die Folien einer Verbundfolie eingelegt werden, wobei die Folie , die dem zu behandelnden Gut zugewandt ist , für Sauerstoff durchlüssig ist, während der üussere Teil der Folie eine Gassperr-schicht aufweist.

## Claims

1. Oxygen absorbent based on a combination of an adsorbent in the form of porous, precipitated silicic acid as a water carrier, water, glucose and glucose oxidase, characterized in that at least 40 vol. % of the particles or pore gaps of the precipitated silicic acid and other admixed solids in the case of a substantially free-flowing product are kept anhydrous.

2. Oxygen absorbent according to claim 1, characterized in that the tablets or pellets obtained after mixing and subsequent compression of the substantially free-flowing product have a residual porous structure.

3. Oxygen absorbent according to claim 1, characterized by crystalline cellulose as the water carrier.

4. Oxygen absorbent according to claim 1, characterized by defatted and ground soja beans as the water carrier.

5. Oxygen absorbent according to claim 1, characterized by ground wheat bran as the water carrier.

6. Oxygen absorbent according to claims 1 to 5, characterized by calcium or magnesium carbonate as the reaction accelerator and/or carbon dioxide source.

7. Oxygen absorbent according to claims 1 to 5, characterized by sodium hydrogen carbonate as the reaction accelerator and/or carbon dioxide source.

8. Oxygen absorbent according to claims 1 to 5, characterized by disodium hydrogen phosphate as the acid binder.

9. Oxygen absorbent according to claims 1 to 5, characterized by calcium hydrogen phosphate as the acid binder.

10. Oxygen absorbent according to claim 6, characterized in that the quantity ratio of the calcium and/or magnesium carbonate to the glucose is 1:5 to 1.5:1.

11. Oxygen absorbent according to claims 1 to 10, characterized by a colour changing pH-indicator following the using up of the acid binder.

12. Use of an oxygen-permeable bag containing an oxygen absorbent according to one or more of the preceding claims 1 to 11 for keeping foods fresh.

13. Use of a very small oxygen-permeable container containing an oxygen absorbent according to one or more of the preceding claims 1 to 11, which is either firmly connected to a bottle cap or to a lid of a food pack for keeping foods fresh.

14. Use of a tablet containing an oxygen absorbent according to one or more of the preceding claims 1 to 11, which is inserted in a prefabricated pocket of a pack or recess of a bottle cap for keeping foods fresh.

15. Use of small pellets containing an oxygen absorbent according to one or more of the preceding claims 1 to 11, which are inserted between the films of a laminated film, the film facing the product to be treated being permeable to oxygen, whereas the outer part of the film has a barrier layer.

**Revendications**

1. Agent d'absorption de l'oxygène, sur la base d'une combinaison d'un agent d'adsorption sous forme d'une silice précipitée, poreuse, comme agent aquifère, d'eau et de glucose et d'oxydase de glucose, agent caractérisé par le fait qu'au moins 40% en volume des particules ou des espaces entre les pores de la silice précipitée et des autres matières solides ajoutées et mélangées, dans le cas d'un produit essentiellement capable de couler, restent exempts d'eau.

2. Agent d'absorption de l'oxygène selon la revendication 1, caractérisé par le fait qu'après mélange, puis compression du produit essentiellement capable de couler, les tablettes ou les comprimés obtenus présentent une structure poreuse résiduelle.

3. Agent d'absorption de l'oxygène selon la revendication 1, caractérisé par de la cellulose cristalline comme agent aquifère.

4. Agent d'absorption de l'oxygène selon la revendication 1, caractérisé par des fèves de soja dégraissées et moulues comme agent aquifère.

5. Agent d'absorption de l'oxygène selon la revendication 1, caractérisé par du son moulu comme agent aquifère.

6. Agent d'absorption de l'oxygène selon les revendications 1 à 5, caractérisé par du carbonate de calcium ou du carbonate de magnésium comme accélérateur de réaction et/ou comme apporteur de bioxyde de carbone.

7. Agent d'absorption de l'oxygène selon les revendications 1 à 5, caractérisé par du carbonate acide de sodium comme accélérateur de réaction et//ou apporteur de bioxyde de carbone.

8. Agent d'absorption de l'oxygène selon les revendications 1 à 5, caractérisé par du phosphate acide disodique comme liant acide.

9. Agent d'absorption de l'oxygène selon les revendications 1 à 5, caractérisé par du phosphate acide monocalcique comme liant acide.

10. Agent d'absorption de l'oxygène selon la revendication 6, caractérisé par le fait que le rapport entre le carbonate de calcium et/ou le carbonate de magnésium au glucose va de 1 : 5 à 1,5 : 1.

11. Agent d'absorption de l'oxygène selon les revendications 1 à 10, caractérisé par un indicateur de pH virant sa couleur après utilisation du liant acide.

12. Emploi d'un sachet perméable à l'oxygène et contenant un agent d'absorption de l'oxygène conforme à une ou plusieurs des revendications précédentes 1 - 11 pour la conservation des produits alimentaires.

13. Emploi d'un petit récipient perméable à l'oxygène contenant un agent d'absorption de l'oxygène conforme à une ou plusieurs des revendications précédentes 1 - 11, récipient lié soit à un bouchon de bouteille, soit à un couvercle d'un emballage de produits alimentaires, pour la conservation des produits alimentaires.

14. Emploi d'une tablette contenant un agent d'absorption de l'oxygène conforme à une ou plusieurs des revendications précédentes 1 - 11, placée dans une poche préfabriquée d'un emballage ou dans un évidement d'un bouchon de bouteille, pour la conservation du produit alimentaire.

15. Emploi de petits comprimés, contenant un agent d'absorption de l'oxygène conforme à une ou plusieurs des revendications précédentes 1 - 11, comprimés qui se placent entre les feuilles d'un stratifié le feuilles, étant précisé que la feuille orientée vers le produit à traiter est perméable à l'oxygène tandis que la feuille extérieure présente une couche formant barrière aux gaz.